(19) **Europäisches Patentamt**
**European Patent Office**
**Office européen des brevets**

(11) **EP 3 405 928 B1**

(12) # EUROPEAN PATENT SPECIFICATION

(45) Date of publication and mention
of the grant of the patent:
**16.07.2025 Bulletin 2025/29**

(51) International Patent Classification (IPC):
**G06T 9/00** *(2006.01)*

(21) Application number: **16836167.3**

(22) Date of filing: **21.12.2016**

(52) Cooperative Patent Classification (CPC):
**G06T 9/00; H04N 19/136; H04N 19/176;**
**H04N 19/184; H04N 19/593; H04N 19/597;**
**H04N 19/61; H04N 19/62; H04N 19/625;**
**H04N 19/91; H04N 19/96**

(86) International application number:
**PCT/JP2016/089223**

(87) International publication number:
**WO 2017/126314 (27.07.2017 Gazette 2017/30)**

(54) **METHOD FOR COMPRESSING POINT CLOUD**

VERFAHREN ZUM KOMPRIMIEREN VON PUNKTWOLKEN

PROCÉDÉ DESTINÉ À COMPRESSER UN NUAGE DE POINTS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.01.2016 US 201615004301**

(43) Date of publication of application:
**28.11.2018 Bulletin 2018/48**

(73) Proprietor: **Mitsubishi Electric Corporation**
**Chiyoda-ku**
**Tokyo 100-8310 (JP)**

(72) Inventors:
  • **COHEN, Robert**
  **Cambridge**
  **Massachusetts 02139 (US)**
  • **TIAN, Dong**
  **Cambridge**
  **Massachusetts 02139 (US)**
  • **VETRO, Anthony**
  **Cambridge**
  **Massachusetts 02139 (US)**

(74) Representative: **Pfenning, Meinig & Partner mbB**
**Patent- und Rechtsanwälte**
**Theresienhöhe 11a**
**80339 München (DE)**

(56) References cited:
• **KRYSTIAN WOJCICKI: "Nearest Neighbour**
**Interpolation - Wojik", 1 January 2020**
**(2020-01-01), pages 1 - 9, XP093141884,**
**Retrieved from the Internet <URL:https://**
**kwojcicki.github.io/blog/**
**NEAREST-NEIGHBOUR> [retrieved on 20240315]**
• **RUFAEL MEKURIA: "Algorithm for inter-**
**predictive coding of unorganized Point Cloud**
**Data", 112. MPEG MEETING; 22-6-2015 -**
**26-6-2015; WARSAW; (MOTION PICTURE**
**EXPERT GROUP OR ISO/IEC JTC1/SC29/WG11),,**
**no. m36528, 19 June 2015 (2015-06-19),**
**XP030064896**
• **HUANG YAN ET AL: "Octree-Based Progressive**
**Geometry Coding of Point Clouds", 29 July 2006**
**(2006-07-29), pages 103 - 110, XP002743406,**
**ISBN: 978-3-905673-32-6, Retrieved from the**
**Internet <URL:http://graphics.ics.uci.edu/**
**upload/PBG06Yan.pdf> [retrieved on 20150817],**
**DOI: 10.2312/SPBG/SPBG06/103-110**
• **CHA ZHANG ET AL: "Point cloud attribute**
**compression with graph transform", 2014 IEEE**
**INTERNATIONAL CONFERENCE ON IMAGE**
**PROCESSING (ICIP), IEEE, 27 October 2014**
**(2014-10-27), pages 2066 - 2070, XP032966955,**
**DOI: 10.1109/ICIP.2014.7025414**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- YAN HUANG ET AL: "A Generic Scheme for Progressive Point Cloud Coding", IEEE TRANSACTIONS ON VISUALIZATION AND COMPUTER GRAPHICS, IEEE SERVICE CENTER, LOS ALAMITOS, CA, US, vol. 14, no. 2, 1 March 2008 (2008-03-01), pages 440 - 453, XP011246520, ISSN: 1077-2626
- JULIUS KAMMERL ET AL: "Real-time compression of point cloud streams", ROBOTICS AND AUTOMATION (ICRA), 2012 IEEE INTERNATIONAL CONFERENCE ON, IEEE, 14 May 2012 (2012-05-14), pages 778 - 785, XP032450378, ISBN: 978-1-4673-1403-9, DOI: 10.1109/ICRA.2012.6224647
- STEFAN GUMHOLD ET AL: "Predictive point-cloud compression", 20050731; 20050731 - 20050804, 31 July 2005 (2005-07-31), pages 137 - es, XP058302295, DOI: 10.1145/1187112.1187277
- KANIMOZHI S ET AL: "Real-time compression strategy on various point cloud systems", INTERNATIONAL JOURNAL OF FUTURISTIC SCIENCE ENGINEERING AND TECHNOLOGY,, vol. 1, no. 3, 1 March 2013 (2013-03-01), pages 245 - 249, XP002732921, ISSN: 2320-4486
- MORELL VICENTE ET AL: "Geometric 3D point cloud compression", PATTERN RECOGNITION LETTERS, ELSEVIER, AMSTERDAM, NL, vol. 50, 12 June 2014 (2014-06-12), pages 55 - 62, XP029075224, ISSN: 0167-8655, DOI: 10.1016/J.PATREC.2014.05.016

## Description

[Technical Field]

The invention relates generally to compressing and representing point clouds, and more particularly to methods and system for predicting and applying transforms to three dimensional blocks of point cloud data for which some positions in a block may not be occupied by a point.

[Background Art]

Point Clouds

A point cloud is a set of data points in some coordinate system. In a three-dimensional coordinate (3D) system, the points can represent an external surface of an object. Point clouds can be acquired by a 3D sensor. The sensors measure a large number of points on the surface of the object, and output the point cloud as a data file. The point cloud represents the set of points that the device has measured.

Point clouds are used for many purposes, including 3D models for manufactured parts, and a multitude of visualization, animation, rendering applications.

Typically, the point cloud is a set of points in three-dimensional (3D) space, with attributes associated with each point. For example, a given point can have a specific $(x, y, z)$ coordinate specifying its position, along with one or more attributes associated with that point. Attributes can include data such as color values, motion vectors, surface normal vectors, and connectivity information. The amount of data associated with the point cloud can be massive, in the order of many gigabytes. Therefore, compression is needed to efficiently store or transmit the data associated with the point cloud for practical applications.

Compression

A number of methods are known for compressing images and videos using prediction and transforms. Existing methods for compressing images and videos typically operate on blocks of pixels. Given a block of data for images or video, every position in the block corresponds to a pixel position in the image or video.

However, unlike images or videos, if a 3D point cloud is partitioned into blocks, not all positions in the block are necessarily occupied by a point. Methods such as prediction and transforms used to efficiently compress video and image blocks will not work directly on blocks of 3D point cloud data. Therefore, there is a need for methods to perform prediction and transforms on blocks of 3D point cloud data for which some of the positions in the blocks may not be occupied by point data.

Applications

With the recent advancements and reductions in cost of 3D sensor technologies, there has been an increasingly wide proliferation of 3D applications such as virtual reality, mobile mapping, scanning of historical artifacts, and 3D printing. These applications use different kinds of sensors to acquired data from the real world in three dimensions, producing massive amounts of data. Representing these kinds of data as 3D point clouds has become a practical method for storing and conveying the data independent of how the data are acquired.

Usually, the point cloud is represented a set of coordinates or meshes indicating the position of each point, along with the one or more attributes associated with each point, such as color. Point clouds that include connectivity information among vertices are known as *structured* or *organized* point clouds. Point clouds that contain positions without connectivity information are *unstructured* or *unorganized* point clouds.

Much of the earlier work in reducing the size of point clouds, primarily structured, has come from computer graphics applications. Many of those applications achieve compression by reducing the number of vertices in triangular or polygonal meshes, for example by fitting surfaces or splines to the meshes. Block-based and hierarchical octree-based approaches can also be used to compress point clouds. For example, octree representations can be used to code structured point clouds or meshes

Significant progress has been made over the past several decades on compressing images and videos. The Joint Photographic Experts Group (JPEG) standard, H.264 or the Moving Picture Experts Group (MPEG-4) Part 10, also known as the Advanced Video Coding (MPEG-4 AVC) standard, and the High Efficiency Video Coding (HEVC) standard are widely used to compress images and video. These coding standards also utilize block-based and/or hierarchical methods for coding pixels. Concepts from these image and video coders have also been used to compress point clouds.

The document "Algorithm for inter-predictive coding of unorganized Point Cloud Data", 112. MPEG Meeting, ISO/IEC JTC1/SC29/WG11 describes an algorithm for inter-predictive compression of sequences of captured/reconstructed point clouds. The described algorithm performs inter-predictive coding based on iterative closest points algorithms and a color variance filter.

Prior art document "Real-time compression of point cloud streams", J. Kammerl et Al, IEEE robotics and automation published in 2012, XP032450378 discloses the representation of the pixels of a voxel of an octree by the voxel center and an octree based point cloud compression.

[Summary of Invention]

The present invention is set out in the appended set of claims. The afore described problem is solved by a method for compressing a point cloud according to claim 1. Preferred embodiments of the method are described in the respective dependent claims. The embodiments of the invention provide method and system for compressing a three-dimensional (3D) point cloud using prediction and transformation of attributes of the 3D point cloud. The point cloud is partitioned into 3D blocks. To compress each block, projections of attributes in previously coded blocks are used to determine directional predictions of attributes in the block currently being coded.

A modified shape-adaptive transform is used to transform the attributes in the current block or the prediction residual block. The residual block results from determining a difference between the prediction block and the current block. The shape-adaptive transform is capable of operating on blocks that have "missing" elements or "holes." i.e., not all possible positions in the block are occupied by points.

As defined herein, the term "position" to refer to the location of a point in 3D space, i.e., the $(x, y, z)$ location of a point in space, anywhere in space, not necessarily aligned to a grid. For example, the position can be specified by a floating-point number. The term "element" to refer to data at a position within a uniformly-partitioned block of data, similar in concept to how a matrix contains a grid of elements, or a block of pixels contains a grid of pixels.

Two embodiments for handling holes inside shapes are provided. One embodiment inserts a value into each hole, and another example shifts subsequent data to fill the holes. A decoder, knowing the coordinates of the points, can reverse these processes without the need for signaling additional shape or region information in the compressed bitstream, unlike the prior-art shape adaptive discrete cosine transform (SA-DCT).

[Brief Description of the Drawings]

[Fig. 1]

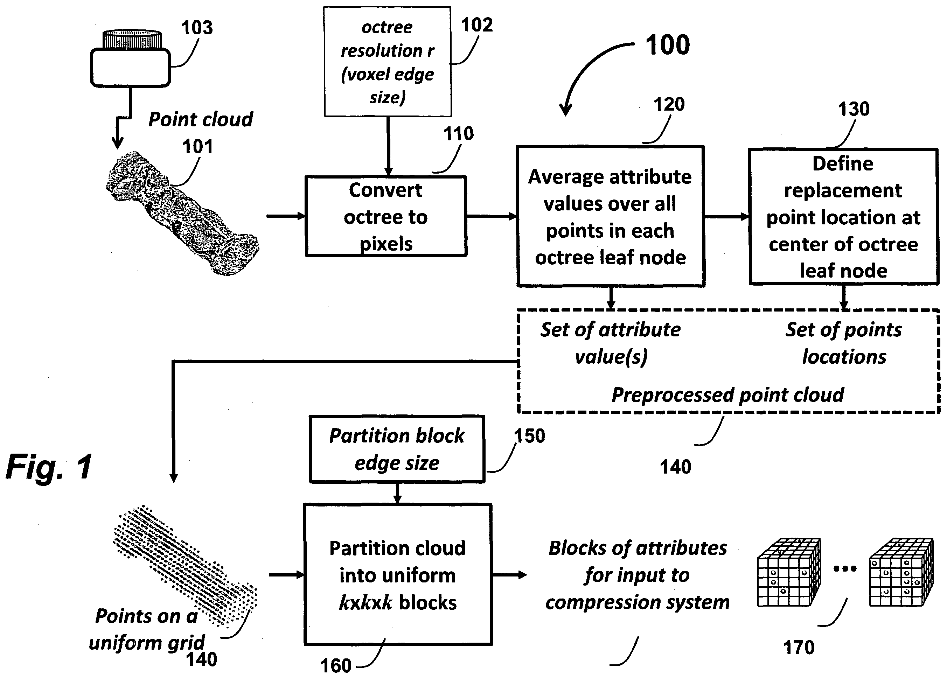

Fig. 1 is a block diagram of preprocessing a point cloud according to embodiments of the invention.
[Fig. 2A]

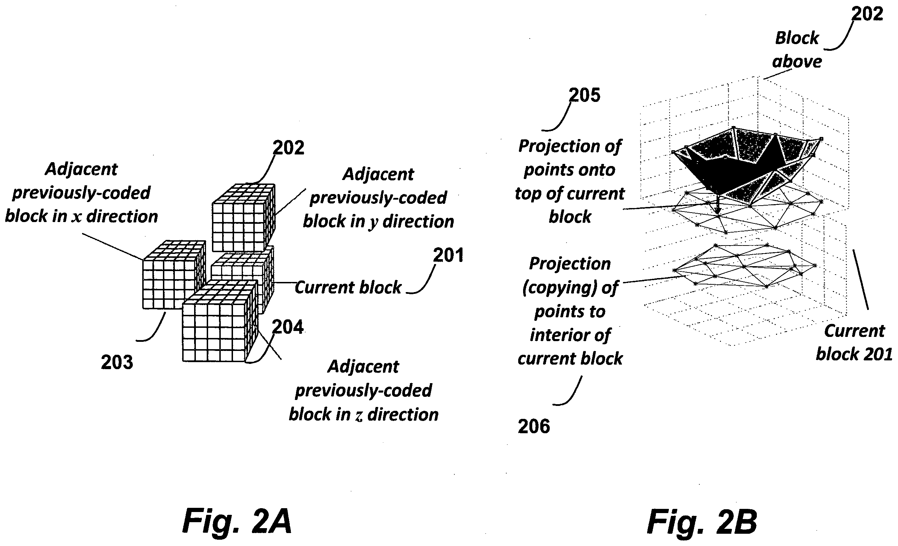

Fig. 2A is a block diagram of predicting points in a current block from points contained in non-empty adjacent blocks.
[Fig. 2B]
Fig. 2B is a schematic of a 3D point cloud block prediction method.
[Fig. 3A]

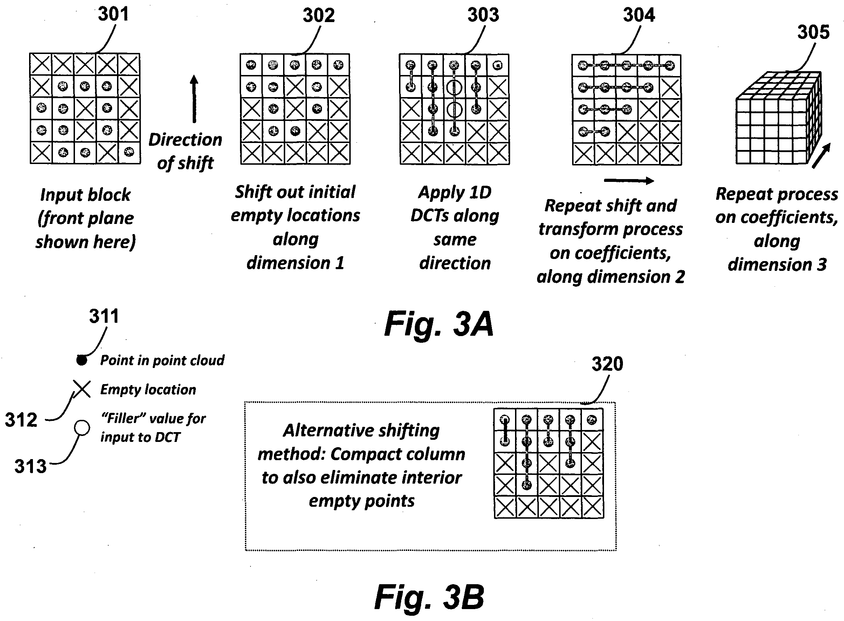

Fig. 3A is a schematic of a shape-adaptive discrete cosine transform process according to the of invention.
[Fig. 3B]
Fig. 3B is a schematic of an alternative shape-adaptive discrete cosine transform process according to the invention.
[Fig. 4A]

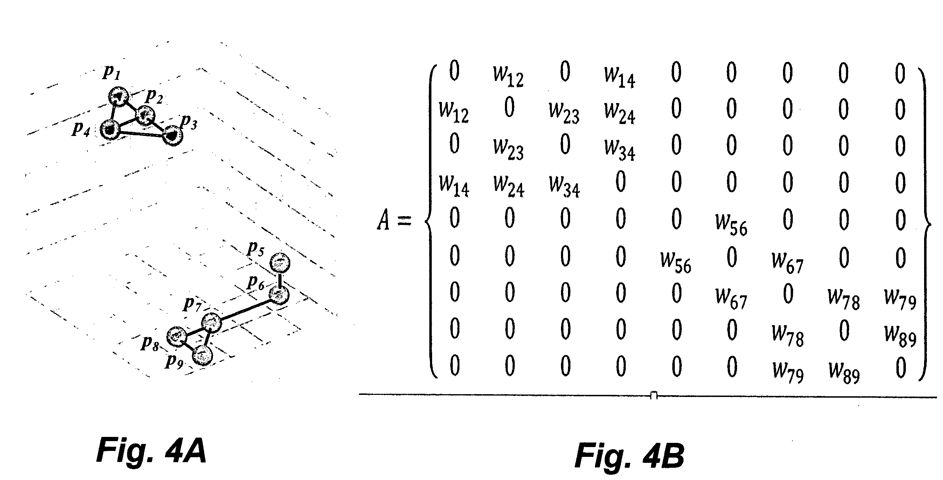

Fig. 4A is a schematic of a graph transform formed by connecting adjacent points present in the 3D block.
[Fig. 4B]
Fig. 4B is an adjacency matrix A including weights associated with the adjacent points.
[Fig. 5]

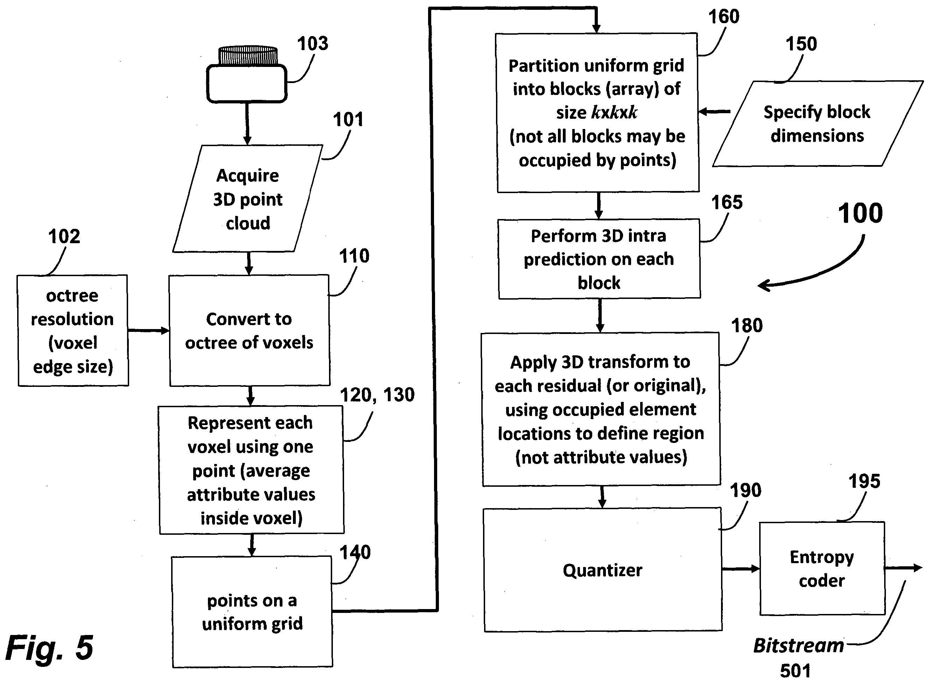

Fig. 5 is a block diagram of the preprocessing and coding method.
[Fig. 6]

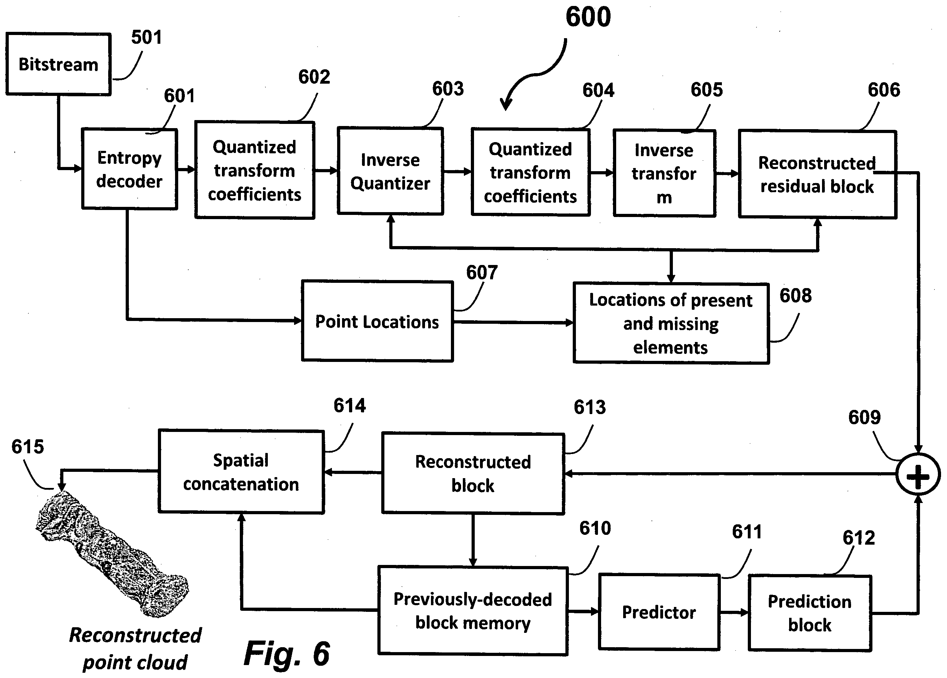

Fig. 6 is a block diagram of a decoding method.

[Description of Embodiments]

The embodiments of the invention provide a method and system for compressing a three-dimensional (3D) point cloud using prediction and transformation of attributes of the 3D point cloud.

Point cloud preprocessing and block partitioning

Sometimes, point clouds are already arranged in a format that is amenable to block processing. For example, graph transforms can be used for compressing point clouds that are generated by sparse voxelization. The data in these point clouds are already arranged on a 3D grid where each direction has dimensions $2^j$ with $j$ being a level within a voxel hierarchy, and the points in each hierarchy level have integer coordinates.

Partitioning such a point cloud into blocks, where the points are already arranged on a hierarchical integer grid, is straightforward. In general, however, point clouds acquired using other techniques can have floating-point coordinate positions, not necessarily arranged on a grid.

In order to be able to process point clouds without constraints on the acquisition technique, we preprocess the point cloud data so the points are located on a uniform grid. This preprocessing can also serve as a form of down-sampling.

Fig. 1 is a block diagram of preprocessing 100 a point cloud 101. The point cloud can be acquired without any constraints of the acquisition modality. In one embodiment, the point cloud 101 is acquired by a depth sensor or scanner 103. Alternatively, the point cloud can be acquired by multiple still cameras, or a video camera at different viewpoints. It is particularly noted that the amount of data can be extremely large, e.g., about several gigabytes or more, making storing and transmitting the data for practical applications difficult with conventional techniques. Hence, the data are compressed as described herein.

The first step of preprocessing converts 110 the point cloud to an octree representation of voxels, also known as a 3D block of pixels, according to an octree resolution r 102, i.e., a size of edges of the voxels. Given the minimal octree resolution $r$, the point cloud is organized or converted 110 into octree nodes. If a node contains no points, then the node is removed from the octree. If a node contains one or more points, then the node is further partitioned into smaller nodes. This process continues until the size, or edge length of a leaf node reaches the minimal octree resolution $r$.

Each leaf node corresponds to a point output by the partitioning step. The position of the output point is set to a geometric center of the leaf node, and the value of any attribute associated with the point is set 120 to an average value of one or more points in the leaf node. This process ensures that the points output by the preprocessing are located on a uniform 3D grid 140 having the resolution $r$.

When the points are arranged on a uniform grid, the region encompassing the set of points is partitioned 160 into 3D blocks of size $k \times k \times k$. A block contains $k^3$ elements, however, many of these elements can be empty, unless the point cloud happens to contain points at every possible position in each block. A block may also have different numbers of elements in each direction; for example, a block can have dimensions k x m x n, hence containing k*m*n elements.

At this stage, the difference between these 3D point cloud blocks and 2D blocks of pixels from conventional image processing becomes apparent. In conventional image processing, all elements of each 2D block correspond to pixel positions present in the image. In other words, all blocks are fully occupied.

However, in the block-based point cloud processing as described herein, the 3D blocks are not necessarily fully occupied. The blocks can contain between 1 and $k^3$ elements. Therefore, procedures, such as intra prediction and block-based transforms, used for conventional image and video coding cannot be directly applied to these 3D blocks. Hence, we provide techniques for accommodating the empty elements.

We define 130 replacement point positions at the center of each octree leaf node. Thus, the preprocessed point cloud 140 has a set of attribute values and a set of point positions. The point cloud can now be partitioned 160 into the array $k \times k \times k$ blocks 170 according to a block edge size 150.

Intra prediction of 3D point cloud blocks

Using prediction among blocks to reduce redundancy is a common technique in current coding standards such as H.264/AVC and HEVC. Adjacent decoded blocks are used to predict pixels in the current block, and then the prediction error or residuals are optionally transformed and coded in a bitstream. We describe a block prediction scheme using a low-complexity prediction architecture in which the prediction is obtained from three directions, i.e., $(x, y, z)$.

As shown in Fig. 2A, points in a current block 201 can be predicted from points contained in non-empty adjacent blocks 202, 203, and 204, when adjacent blocks are available. The point cloud encoder performs prediction in the x, y, and z directions and selects the prediction direction that yields the least distortion. Coding the current block without prediction from adjacent blocks can also be considered if that can yield a lower distortion. Therefore, the current block has the option of being coded with or without prediction.

As described above, many of the $k^3$ elements in a block may not be occupied by points. Moreover, points within a block may not necessarily be positioned along the edges or boundaries of the block. The intra prediction techniques of H.264/AVC and HEVC use pixels along the boundaries of adjacent blocks to determine predictions for the current block.

As shown in Fig. 2B for our 3D point cloud block prediction method, we use multivariate interpolation and extrapolation to determine a projection of the attribute values in, e.g., the adjacent block 202 onto the adjacent edge plane of the current block 201. For example, we project 205 of points onto top of current block, and project 206 points to the interior of the current block.

Here, data from known points is used to determine an interpolation or prediction located at an arbitrary point, in this case, along the boundary between the previous block and the current block.

In our case, suppose the block 202 above the current block contains a set of point positions $\mathbf{P} = \{\mathbf{p}_1, \mathbf{p}_2, ..., \mathbf{p}_N\}$, with the points having associated attribute values $\mathbf{A} = \{\mathbf{a}_1, \mathbf{a}_2, ..., \mathbf{a}_N\}$. Given a point position along the boundary $\mathbf{p}_{\text{boundary}}$, the prediction takes the form

$$\mathbf{a}_{\text{boundary}} = f(\mathbf{P}, \mathbf{A}, \mathbf{p}_{\text{boundary}}),$$

where $\mathbf{a}_{\text{boundary}}$ is the predicted value of the attribute at the boundary.

We can use a nearest-neighbor interpolation and extrapolation, which reduces complexity and simplifies the handling of degenerate cases in which the adjacent block contains only one or two points, or when all the points in the adjacent block are aligned on a plane perpendicular to the projection plane.

After the attribute values along the boundary plane are estimated, these values are then projected 206 or replicated into the current block parallel to the direction of prediction. This is similar to how prediction values are replicated into the current block for the directional intra prediction used in standards such as H.264/AVC and HEVC.

The projected and replicated values are used to predict attributes for points in the current block. For example, if the adjacent block in the $y$ direction is used for prediction, then the set of points along the boundary $\mathbf{p}_{\text{boundary}}$ are indexed in two dimensions, i.e. $p(x, z)$, and the attribute for a point the current block $p_{\text{curr}}(x, y, z)$ is predicted using $a_{\text{boundary}}(x, z)$ for all values of $y$.

Transforms for 3D block data

After the prediction process, a 3D block containing prediction residuals for each point in the current block, or the current block itself if it yields lower coding distortion, is transformed. As was the case for the prediction process, not all the positions in the block may be occupied by a point. Therefore, the transform is designed so that it will work on these potentially sparse blocks. We consider two types of transforms: a novel variant of a conventional shape-adaptive discrete cosine transform (SA-DCT) designed for 3D point cloud attribute compression, and a 3D graph transform.

Modified shape-adaptive DCT

The shape-adaptive DCT (SA-DCT) is a well-known transform designed to code arbitrarily shaped regions in images. A region is defined by a contour, e.g., around a foreground region of an image. All the pixels inside the region are shifted and then transformed in two dimensions using orthogonal DCTs of varying lengths. The contour positions and quantized transform coefficients are then signaled in the bitstream.

For our 3D point cloud compression method, we treat the presence of points in a 3D block as a "region" to be coded, and positions in the block that do not contain points are considered as being outside the region. For the attribute coding application described herein, the point positions are already available at the decoder irrespective of what kind of transform is used.

Because our 3D SA-DCT regions are defined by the point positions and not by the attribute values of the points, there is no need to perform operations, such as foreground and background segmentation and coding of contours, as is typically done when the SA-DCT is used for conventional 2D image coding.

Fig. 3A shows our modified SA-DCT process, where closed circles 311 represent points in the point cloud, X 312 represent empty positions, and open circles 313 represent "filler" value for input to the DCT. Given a 3D block 301 of attribute values or prediction residual values, the points present in the block are shifted 302 line by line along dimension 1 toward the border so that there are no empty positions in the block along that border, except for empty lines. We apply 303 a 1D DCT along the same direction. Then, we repeat 304-305 the shift and transform process on coefficients along dimensions 2 and 3 resulting in one DC and one or more AC coefficients. If there are empty positions between the first and last points in the column, we insert filler values, e.g. zero. Compression is achieved by quantizing the coefficients.

Fig. 3B shows an alternative method that shifts 320 the remaining data in the column into those empty positions to eliminate interior empty positions, thus reducing the lengths of the DCTs.

In another embodiment, all remaining empty positions in a 3D block are filled with predetermined values, so that all 1D DCTs applied to the block in a given direction have the same length, equal to the number of missing and nonmissing elements along that direction in the 3D block.

3D graph transform

The transform on the 3D blocks of attributes can use a graph transform. Because our point cloud is partitioned into 3D blocks, we can apply the graph transform on each block.

Fig. 4A shows the basic idea behind our graph transform. A graph is formed by connecting adjacent points present in the 3D block. Two points $p_i$ and $p_j$ are adjacent if the points are at most one position apart in any dimension. Graph weights $w_{ij}$ are assigned to each connection (graph edge) between points $p_i$ and $p_j$. The weights of each graph edge are inversely proportional to the distance between the two connected points.

As shown in Fig. 4B, an adjacency matrix A including the weights of the graph edges, from which a graph Laplacian matrix Q is determined. The eigenvector matrix of Q is used as a transform for the attribute values. After the transform is applied, each connected sub-graph has the equivalent of one DC coefficient, and one or more AC coefficients.

In contrast to the modified SA-DCT, which always produces only one DC coefficient, the graph transform method generates one DC coefficient for every disjoint connected set of points in the block, and each DC coefficient has a set of corresponding AC coefficients. In the example of Fig. 4A, the graph is composed of two disjoint sub-graphs, so the resulting graph transform produces two DC coefficients and two corresponding sets of AC coefficients.

Preprocessing and coding

Fig. 5 shows the preprocessing and coding method. The input point cloud 101 acquired by the sensor 103 is preprocessed as described with reference to Fig. 1 to generate the point cloud 140 on a uniform grid. Next, the block partitioning 160, intra prediction 165, and 3D transform 180 are applied. Entropies of transform coefficient magnitudes and sign bits are measured. Then, a quantizer 190 is applied to the transform coefficients. For example, a uniform quantizer can be used to quantize the transform coefficients, with a fixed step size set to determine the amount of compression. The quantized transform coefficients, along with any side information, are then entropy coded 195 for output into a bitstream 501.

The steps of the method described herein can be performed in a processor 100 connected to memory and input/output interfaces as known in the art.

Decoder

Fig. 6 shows the decoding method. A bitstream 501 is entropy decoded 601 to produce quantized transform coefficients 602, which are inverse-quantized 603 to produce quantized transform coefficients 604. The quantized transform coefficients are inverse transformed 605 to produce a reconstructed residual block 606. Already-decoded point locations 607 can be used to determine the locations of present and missing elements 608 in the set of quantized transform coefficients or in the reconstructed residual block. Using previously-decoded blocks from memory 610, a predictor 611 computes a prediction block 612. The reconstructed residual block is combined or added 609 to the prediction block to form a reconstructed block 613. Reconstructed blocks are spatially concatenated 614 to previously-decoded reconstructed blocks to produce an array of 3D blocks representing the reconstructed point cloud 615 output by the decoder system 600.

Effect of the Invention

The embodiments of the invention extend some of the concepts used to code images and video to compress attributes from unstructured point clouds. Point clouds are preprocessed so the points are arranged on a uniform grid, and then the grid is partitioned into 3D blocks. Unlike image and video processing in which all points in a 2D block correspond to a pixel position, our 3D blocks are not necessarily fully occupied by points. After performing 3D block-based intra prediction, we transform using a 3D shape-adaptive DCT according to the invention or a graph transform, which is outside the scope of the invention, and then quantize the resulting data.

**Claims**

1. A method for compressing a point cloud (101), wherein the point cloud (101) is composed of a plurality of points in a three-dimensional (3D) space, comprising steps:

   acquiring the point cloud (101) with a sensor (103), wherein each point is associated with a 3D coordinate and at least one attribute value; converting (110) the point cloud (101) to a uniform grid of points by partitioning the point cloud into an octree of voxels ; wherein: each leaf node in the octree corresponds to a point output by the partitioning, and the position of the point is set to a geometric center of the leaf node, and the attribute value associated with the point is set to an average attribute value of one or more points in the leaf node; wherein the partitioning is repeated until the voxels have a minimal predefined resolution;

   partitioning the uniform grid of points region into an array of 3D blocks (170) of elements, each 3D block having the same size, wherein some of the elements in the 3D blocks have missing points; predicting (165), for each 3D block, attribute values for the 3D block based on the attribute values of neighboring 3D blocks, wherein: the prediction for the current block (201) is from points contained in non-empty adjacent blocks (202, 203, 204), wherein after the attribute values in an adjacent block along a boundary plane between the adjacent block and the current block are estimated, these values are then projected or replicated into the current block parallel to the direction of prediction; and obtaining a 3D prediction residual block indicative of a difference between the predicted attribute values for the 3D block and the acquired attribute values, associated with each point of the point cloud, in the 3D block; applying (180) a 3D transform to each 3D prediction residual block using locations of occupied elements to produce transform coefficients, wherein the transform coefficients have a magnitude and sign; and entropy encoding (195) the transform coefficients according the magnitudes and sign bits to produce a bitstream (501), wherein: the 3D transform is a shape-adaptive discrete cosine transform (SA-DCT), wherein the occupied elements in each said 3D prediction residual block are considered to be the region to be coded for the SA-DCT, wherein the steps are performed in a processor.

2. The method of claim 1, wherein the partitioning is according to a block edge size (150).

3. The method of claim 1, wherein the prediction selects a prediction direction that yields a least distortion.

4. The method of claim 1, wherein the attribute is color information.

5. The method of claim 1, wherein the attribute is reflectivity information.

6. The method of claim 1, wherein the attribute is a normal vector.

7. The method of claim 1, further comprising:

   entropy decoding (601) the bitstream (501) to obtain transform coefficients (602) and point locations (607); applying an inverse 3D SA-DCT transform (603, 605) to the transform coefficients (602) to produce a 3D prediction residual block (606); arranging the elements in the 3D prediction residual block according to the point locations (607) of occupied elements; predicting, for each 3D prediction residual block, attribute values for the 3D block based on the attribute values of neighboring 3D blocks, and obtaining a 3D prediction block (612); combining (609) the 3D prediction block (612) to the 3D prediction residual block (606) to obtain a 3D reconstructed block (613); concatenating (614) the 3D reconstructed block to previouslyreconstructed 3D blocks to form an array of 3D reconstructed blocks; and outputting the array of 3D reconstructed blocks as a reconstructed 3D point cloud (615).

8. The method of claim 7, wherein the arranging of elements according to the locations of the occupied elements is performed before the inverse 3D transform is applied.

**Patentansprüche**

1. Verfahren zum Komprimieren einer Punktwolke (101), wobei die Punktwolke (101) aus einer Vielzahl von Punkten in einem dreidimensionalen (3D) Raum zusammengesetzt ist, umfassend die Schritte:

Beschaffen der Punktwolke (101) mit einem Sensor (103), wobei jedem Punkt eine 3D-Koordinate und mindestens ein Attributwert zugeordnet ist; Umwandeln (110) der Punktwolke (101) in ein einheitliches Punktgitter durch Partitionieren der Punktwolke in einen Octree von Voxeln; wobei: jeder Blattknoten in dem Octree entspricht einem Punkt, der durch die Partitionierung ausgegeben wird, und die Position des Punktes ist auf einen geometrischen Mittelpunkt des Blattknotens eingestellt, und der dem Punkt zugeordnete Attributwert ist auf einen durchschnittlichen Attributwert von einem oder mehreren Punkten in dem Blattknoten eingestellt; wobei die Partitionierung wiederholt wird, bis die Voxel eine minimale vordefinierte Auflösung haben; Partitionieren des einheitlichen Punktgitterbereichs in ein Array von 3D-Blöcken (170) von Elementen, wobei jeder 3D-Block die gleiche Größe aufweist, wobei einige der Elemente in den 3D-Blöcken fehlende Punkte aufweisen; Vorhersagen (165), für jeden 3D-Block, von Attributwerten für den 3D-Block, auf Grundlage der Attributwerte der benachbarten 3D-Blöcke, wobei: die Vorhersage für den aktuellen Block (201) geht von Punkten aus, die in nicht leeren benachbarten Blöcken (202, 203, 204) enthalten sind, wobei, nachdem die Attributwerte in einem benachbarten Block entlang einer Grenzebene zwischen dem benachbarten Block und dem aktuellen Block geschätzt wurden, diese Werte dann in den aktuellen Block parallel zur Richtung der Vorhersage projiziert oder repliziert werden; und Erhalten eines 3D-Vorhersagerestblocks, der eine Differenz zwischen den vorhergesagten Attributwerten für den 3D-Block und den beschafften Attributwerten, die jedem Punkt der Punktwolke zugeordnet sind, in dem 3D-Block angibt; Anwenden (180) einer 3D-Transformation auf jeden 3D-Vorhersagerestblock unter Verwendung von Positionen belegter Elemente, um Transformationskoeffizienten zu erstellen, wobei die Transformationskoeffizienten eine Größe und ein Vorzeichen aufweisen; und Entropiekodieren (195) der Transformationskoeffizienten gemäß den Größen und Vorzeichenbits, um einen Bitstrom (501) zu erstellen, wobei: die 3D-Transformation ist eine formadaptive diskrete Kosinustransformation (SA-DCT), wobei die belegten Elemente in jedem 3D-Vorhersagerestblock als der für die SA-DCT zu kodierende Bereich betrachtet werden, wobei die Schritte in einem Prozessor durchgeführt werden.

2. Verfahren nach Anspruch 1, wobei die Partitionierung gemäß einer Blockkantengröße (150) erfolgt.

3. Verfahren nach Anspruch 1, wobei die Vorhersage eine Vorhersagerichtung auswählt, die eine geringste Verzerrung ergibt.

4. Verfahren nach Anspruch 1, wobei das Attribut eine Farbinformation ist.

5. Verfahren nach Anspruch 1, wobei das Attribut eine Reflexionsinformation ist.

6. Verfahren nach Anspruch 1, wobei das Attribut ein Normalvektor ist.

7. Verfahren nach Anspruch 1, ferner umfassend:

Entropiedekodieren (601) des Bitstroms (501), um Transformationskoeffizienten (602) und Punktpositionen (607) zu erhalten; Anwenden einer inversen 3D-SA-DCT-Transformation (603, 605) auf die Transformationskoeffizienten (602), um einen 3D-Vorhersagerestblock (606) zu erstellen; Anordnen der Elemente im 3D-Vorhersagerestblock entsprechend den Punktpositionen (607) der belegten Elemente;

Vorhersagen, für jeden 3D-Vorhersagerestblock, von Attributwerten für den 3D-Block, auf Grundlage der Attributwerte der benachbarten 3D-Blöcke, und Erhalten eines 3D-Vorhersageblocks (612);

Kombinieren (609) des 3D-Vorhersageblocks (612) mit dem 3D-Vorhersagerestblock (606), um einen rekonstruierten 3D-Block (613) zu erhalten;

Verketten (614) des rekonstruierten 3D-Blocks mit zuvor rekonstruierten 3D-Blöcken, um ein Array von rekonstruierten 3D-Blöcken zu bilden; und

Ausgeben des Arrays von rekonstruierten 3D-Blöcken als rekonstruierte 3D-Punktwolke (615).

8. Verfahren nach Anspruch 7, wobei die Anordnung der Elemente gemäß den Positionen der belegten Elemente vor Anwendung der inversen 3D-Transformation durchgeführt wird.

**Revendications**

1. Procédé de compression d'un nuage de points (101), dans lequel le nuage de points (101) est composé d'une pluralité de points dans un espace tridimensionnel (3D), comprenant les étapes consistant à :

acquérir le nuage de points (101) à l'aide d'un capteur (103), dans lequel chaque point est associé à une coordonnée 3D et à au moins une valeur d'attribut ;

convertir (110) le nuage de points (101) en une grille uniforme de points en partitionnant le nuage de points en un octree de voxels ;

dans lequel : chaque nœud feuille dans l'octree correspond à un point délivré en sorti par le partitionnement, et la position du point est définie sur un centre géométrique du nœud feuille, et la valeur d'attribut associée au point est définie sur une valeur d'attribut moyenne d'un ou plusieurs points dans le nœud feuille ; dans lequel le partitionnement est répété jusqu'à ce que les voxels aient une résolution prédéfinie minimale ;

partitionner la région de grille de points uniforme en un réseau de blocs 3D (170) d'éléments, chaque bloc 3D présentant la même taille, dans lequel certains des éléments dans les blocs 3D présentent des points manquants ;

prédire (165), pour chaque bloc 3D, des valeurs d'attribut pour le bloc 3D sur la base des valeurs d'attribut de blocs 3D voisins,

dans lequel : la prédiction pour le bloc actuel (201) est à partir de points contenus dans des blocs adjacents non vides (202, 203, 204), dans lequel après que les valeurs d'attribut dans un bloc adjacent le long d'un plan de frontière entre le bloc adjacent et le bloc actuel soient estimées, ces valeurs sont ensuite projetées ou répliquées dans le bloc actuel parallèlement à la direction de prédiction ; et obtenir un bloc résiduel de prédiction 3D indicatif d'une différence entre les valeurs d'attribut prédites pour le bloc 3D et les valeurs d'attribut acquises, associées à chaque point du nuage de points, dans le bloc 3D ;

appliquer (180) une transformation 3D à chaque bloc résiduel de prédiction 3D en utilisant des emplacements d'éléments occupés pour produire des coefficients de transformation, dans lequel les coefficients de transformation présentent une amplitude et un signe ; et

coder par entropie (195) des coefficients de transformation en fonction des grandeurs et des bits de signe pour produire un flux binaire (501),

dans lequel : la transformation 3D est une transformation en cosinus discrète à adaptation de forme (SA-DCT), dans lequel les éléments occupés dans chaque bloc résiduel de prédiction 3D sont considérés comme étant la région à coder pour la SA-DCT, dans lequel les étapes sont effectuées dans un processeur.

2. Procédé selon la revendication 1, dans lequel le partitionnement est conforme à une taille de bord de bloc (150).

3. Procédé selon la revendication 1, dans lequel la prédiction sélectionne une direction de prédiction qui produit une moindre distorsion.

4. Procédé selon la revendication 1, dans lequel l'attribut est une information de couleur.

5. Procédé selon la revendication 1, dans lequel l'attribut est une information de réflectivité.

6. Procédé selon la revendication 1, dans lequel l'attribut est un vecteur normal.

7. Procédé selon la revendication 1, comprenant en outre les étapes consistant à :

décoder par entropie (601) le flux binaire (501) pour obtenir des coefficients de transformation (602) et des emplacements de points (607) ;

appliquer une transformation SA-DCT 3D inverse (603, 605) aux coefficients de transformation (602) pour produire un bloc résiduel de prédiction 3D (606) ;

agencer les éléments dans le bloc résiduel de prédiction 3D en fonction des emplacements de points (607) d'éléments occupés ;

prédire, pour chaque bloc résiduel de prédiction 3D, des valeurs d'attribut pour le bloc 3D sur la base des valeurs d'attribut de blocs 3D voisins, et obtenir un bloc de prédiction 3D (612) ;

combiner (609) le bloc de prédiction 3D (612) au bloc résiduel de prédiction 3D (606) pour obtenir un bloc reconstruit 3D (613) ;

concaténer (614) le bloc reconstruit 3D en blocs 3D reconstruits précédemment pour former un réseau de blocs reconstruits 3D ; et

délivrer en sortie le réseau de blocs reconstruits 3D sous la forme d'un nuage de points 3D reconstruit (615).

8. Procédé selon la revendication 7, dans lequel l'agencement d'éléments selon les emplacements des éléments occupés est effectué avant que la transformation 3D inverse ne soit appliquée.

**Fig. 1**

EP 3 405 928 B1

**Fig. 2A**

**Fig. 2B**

EP 3 405 928 B1

**301**
Input block
(front plane
shown here)

Direction
of shift

**302**
Shift out initial
empty locations
along
dimension 1

**303**
Apply 1D
DCTs along
same
direction

**304**
Repeat shift and
transform process
on coefficients,
along dimension 2

**305**
Repeat process
on coefficients,
along
dimension 3

*Fig. 3A*

**311**
● Point in point cloud

**312** ✕ Empty location

**313** ○ "Filler" value for
input to DCT

**320**
Alternative shifting
method: Compact column
to also eliminate interior
empty points

*Fig. 3B*

EP 3 405 928 B1

**Fig. 4A**

$$A = \begin{cases} 0 & w_{12} & 0 & w_{14} & 0 & 0 & 0 & 0 & 0 \\ w_{12} & 0 & w_{23} & w_{24} & 0 & 0 & 0 & 0 & 0 \\ 0 & w_{23} & 0 & w_{34} & 0 & 0 & 0 & 0 & 0 \\ w_{14} & w_{24} & w_{34} & 0 & 0 & 0 & 0 & 0 & 0 \\ 0 & 0 & 0 & 0 & 0 & w_{56} & 0 & 0 & 0 \\ 0 & 0 & 0 & 0 & w_{56} & 0 & w_{67} & 0 & 0 \\ 0 & 0 & 0 & 0 & 0 & w_{67} & 0 & w_{78} & w_{79} \\ 0 & 0 & 0 & 0 & 0 & 0 & w_{78} & 0 & w_{89} \\ 0 & 0 & 0 & 0 & 0 & 0 & w_{79} & w_{89} & 0 \end{cases}$$

**Fig. 4B**

EP 3 405 928 B1

*Fig. 5*

150 — Specify block dimensions

160 — Partition uniform grid into blocks (array) of size *kxkxk* (not all blocks may be occupied by points)

165 — Perform 3D intra prediction on each block

180 — Apply 3D transform to each residual (or original), using occupied element locations to define region (not attribute values)

190 — Quantizer

195 — Entropy coder

*Bitstream* 501

100

103

101 — Acquire 3D point cloud

110 — Convert to octree of voxels

102 — octree resolution (voxel edge size)

120, 130 — Represent each voxel using one point (average attribute values inside voxel)

140 — points on a uniform grid

**600**

Bitstream — 501

Entropy decoder — 601

Quantized transform coefficients — 602

Inverse Quantizer — 603

Quantized transform coefficients — 604

Inverse transform m — 605

Reconstructed residual block — 606

Point Locations — 607

Locations of present and missing elements — 608

609

Spatial concatenation — 614

Reconstructed block — 613

615

Previously-decoded block memory — 610

Predictor — 611

Prediction block — 612

*Reconstructed point cloud*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Algorithm for inter-predictive coding of unorganized Point Cloud Data. *MPEG Meeting*

- **J. KAMMERL et al.** Real-time compression of point cloud streams. *IEEE robotics and automation*, 2012